# EUROPEAN PATENT SPECIFICATION

(11) **EP 0 416 716 B1**
(45) Date of publication and mention of the grant of the patent: **12.04.1995**
(21) Application number: 90250208.7
(22) Date of filing: 16.08.1990
(51) Int. Cl.: H02H 5/08

(54) **Water sensing type power breaker circuit**
Wasserempfindlicher Lastkreisschalter
Interrupteur de puissance répondant à la présence de l'eau

(30) Priority: 05.09.1989 JP 229587/89; 17.11.1989 JP 298817/89
(43) Date of publication of application: 13.03.1991
(73) Proprietor: Uchiya Thermostat Co., Misato-shi Saitama-ken (JP)
(72) Inventor: Takeda, Hideaki, Misato-shi, Saitama-ken (JP)
(74) Representative: Meissner, Peter E., Dipl.-Ing.

(56) References cited:
- WO-A-87/01902
- DE-A- 3 514 135
- DE-A- 3 621 528
- DE-A- 3 800 291
- GB-A- 2 201 054

## Description

### 1. FIELD OF THE INVENTION AND RELATED ART STATEMENT

The present invention relates to a water sensing type power breaker circuit which can be incorporated into an electric appliance such as a hair dryer or the like to cut off a power supply to prevent an accident due to an electric shock immediately when the electric appliance is dropped into water.

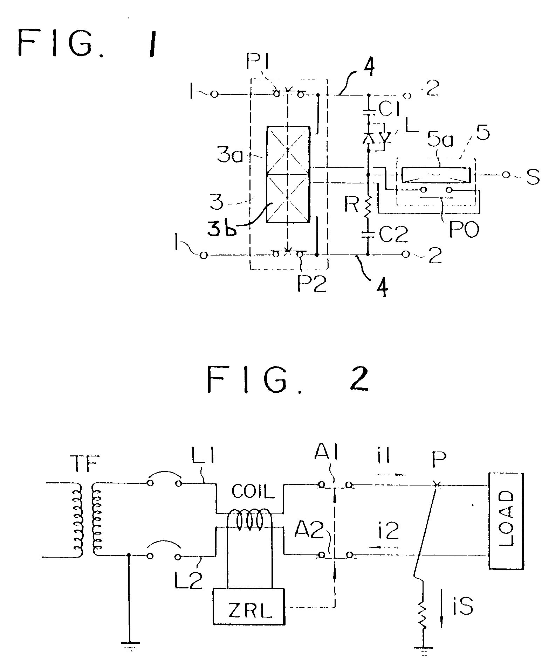

Fig. 2 is a circuit diagram of an example of a conventional water sensing type power breaker circuit.

One output terminal of a transformer is connected to ground. Accordingly, when an electric appliance is dropped into water electrically connected to ground, a leakage current is flows in the water.

A total current i₁+i₂ of currents i₁ and i₂ flowing through conductors L₁ and L₂, respectively, connecting the transformer TF and a load circuit LOAD is detected by a coil COIL of a relay ZRL. Since the flowing directions of the currents i₁ and i₂ are opposite to each other, i₁+i₂=0 in the case of iₛ=0. However, when the electric appliance is dropped into the water and the leakage current iₛ is not 0, i₁+i₂≠0. At this time, the relay ZRL is operated to open contacts A₁ and A₂ so that a power supply is cut off.

This conventional water sensing type power breaker circuit is expensive and requires a large space.

DE-A-3 621 528 discloses a water sensing type power breaker circuit as specified in the preamble of claim 1. In this prior art water sensing type power breaker circuit the impedance elements are resistors and the detecting means is formed by a coil of the first relay itself, so that a relatively high leakage current is necessary to open the contacts of the first relay.

### 2. OBJECT AND SUMMARY OF THE INVENTION

With respect to the prior art disclosed in DE-A-3 621 528, it is an object of the invention to provide an improved water sensing type power circuit breaker which is cheap and occupies a small space so that it can be directly incorporated into an electric appliance such as a dryer, and in which the leakage current required to open the contacts of the first relay is limited.

In order to achieve the above object, the water sensing type power breaker circuit according to the present invention is characterised in that it comprises a second relay for detecting the current flowing in the conductors of the water sensing element and controlling the first relay to open said first and second contacts when a current flows in said conductor, and said first and second impedance elements are capacitors.

The present invention is advantageous in that:
i) the capacity of both the capacitors constituting the impedance elements can be made equal to, for example, about 0.2 »F, so that the leakage current is about 2 to 5 mA and the load is cut off from the power supply by this leakage current.
ii) Since the water sensing element is a mere electrical conductor, its occupancy volume is small and it can be mounted on any location of the electric appliance freely. Even in a small electric appliance such as, for example, a hair dryer, the electrical conductor is simply disposed in an air intake or an air outlet constituting a water entering opening to form the water sensing element.
iii) Since any special electrical element is not required, the water sensing element can be made inexpensively and can be attached to a cheap electric appliance such as a hair dryer.

### 3. BRIEF DESCRIPTION OF THE DRAWINGS

Fig. 1 is a circuit diagram according to the present invention where impedance elements are capacitors;
Fig. 2 is a circuit diagram of a conventional water sensing type power breaker;

### 4. DETAILED DESCRIPTION OF PREFERRED EMBODIMENT

Fig. 1 is a circuit diagram of a preferred embodiment of a water sensing type power breaker circuit according to the present invention.

A first relay 3 is disposed between terminals 1, 1 on the side of an ac power supply and terminals 2, 2 on the side of a load. The first relay 3 cuts off two conductors 4, 4 connecting the power supply to the load by means of contacts P₁ and P₂. Two ends of coils of the first relay are connected to the conductors 4, 4 between the contacts P₁, P₂ and the load-side terminals 2, 2. The first relay comprises two coils 3a and 3b connected in series with each other and a junction between both the coils 3a and 3b is cut off by a contact P₀ of a second relay 5. This contact is "off", that is open, in the normal state. When both the coils are connected through the contact P₀ of the second relay, a current flows through both the coils from the power supply and both the contacts P₁ and P₂ of the first relay are opened by the exciting force of the coils 3a and 3b so that the load is cut off from the power supply. The contacts are maintained to be opened mechanically by a mechanism not shown and are returned to be closed by an external mechanical force.

A capacitor circuit including a first capacitor C₁, a light emitting diode L, a resistor R and a second capacitor C₂ connected in series is connected in parallel with the load between the contacts P₁, P₂ of the first relay and the load.

When the contact of the first relay is closed, an ac current flows through the capacitor circuit so that the light emitting diode L emits light. The state in which the light emitting diode emits light represents that both the contacts P₁ and P₂ are closed and the circuit is in the normal state.

One end of a coil 5a of the second relay is connected to an intermediate point between the capacitors C₁ and C₂ of the capacitor circuit and the other end of the coil 5a is connected to a water sensing element S. When the water sensing element is brought into contact with water which is electrically connected to ground or when the water sensing element is electrically brought into contact with any one of the conductors 4 through water, a current flows through the coil 5a of the second relay. The contact Pₒ of the second relay is closed by the exciting force of the coil 5a produced by the current. Consequently, both the coils of the first relay are connected with each other and a current flows through both the coils so that the contacts P₁ and P₂ of the first relay are opened to cut off the load from the power supply and stop the light emission of the light emitting diode L. Further, when a current flows through the coil 5a of the second relay, the coil 5a is necessarily connected in series to any one of the capacitors C₁ and C₂ and water serving as a resistor and accordingly a kind of constant current circuit is formed to limit a leakage current.

When the water sensing type power breaker circuit is mounted in the electric appliance, it is required that the relays, the power-side terminal of the relays and the portion connected to the power supply are made watertight by heat-shrinkable resin or the like so that the leakage current does not flow from the relays and the power-side terminals of the relays when the water sensing element detects the flowing of a current and the relays are operated so that the first and second contacts are opened. It is preferred that the whole circuit is made watertight.

## Claims

1. A water sensing type power breaker circuit comprising a first relay (3) including first and second contacts (P₁,P₂) one side of these contacts being connected to an AC power supply and the other side being connected to a load, an impedance element circuit including first and second impedance elements (C₁, C₂) connected in series with each other in parallel with the load, said first relay (3) and said impedance elements (C₁, C₂)
being arranged to be supplied from the load side of said first and second contacts, a water sensing element (S) made of an electric conductor connected to an intermediate point between said impedance elements (C₁, C₂) and means for detecting a current flowing in said conductor of the water sensing element to open said first and second contacts (P₁, P₂) when a current flows therein, the state of opening of said first and second contacts being mechanically maintained, characterized in that
- the circuit comprises a second relay (5) for detecting the current flowing in the conductor of the water sensing element (S) and controlling the first relay (3) to open said first and second contacts (P₁, P₂) when a current flows in said conductor, and
- said first and second impedance elements (C₁, C₂) are capacitors.

2. A water sensing type power breaker circuit according to Claim 1, wherein said second relay (5) includes a coil (5a) for detecting that a current flows through said water sensing element (S) and a coil of said first relay (3) is cut off by an output contact of said second relay (5).

3. A water sensing type power breaker circuit according to Claim 1, wherein a light emitting diode (L) is connected in series with said capacitors (C₁, C₂) of the impedance element circuit.

4. A water sensing type power breaker circuit according to Claim 1, wherein said relays, the power-side terminals of said relays and the portion of the water sensing type power breaker circuit connected to the power supply are made watertight.

## Patentansprüche

1. Eine auf Wasser ansprechende Unterbrecherschaltung, bestehend aus einem ersten Relais (3) mit einem ersten und einem zweiten Kontakt (P₁, P₂), wobei eine Seite dieser Kontakte mit einer Wechselstromquelle und die andere Seite mit einem Verbraucher verbunden ist. einer Impedanzgliedschaltung mit einem in Reihe geschalteten ersten und zweiten Impedanzglied (C₁, C₂) in Parallelschaltung zum Verbraucher, wobei das erste Relais (3) und die Impedanzglieder (C₁, C₂) so angebracht sind, daß sie von der Verbraucherseite des ersten und zweiten Kontakts gespeist werden, einem aus einem elektrischen Leiter bestehenden Wassersensor (S), der an einer Stelle zwischen den Impedanzgliedern (C₁, C₂) angeschlossen ist, und Einrichtungen zum Feststellen eines in dem Leiter des Wassersensors fließenden Stroms, so daß der erste und zweite Kontakt (P₁, P₂) geöffnet werden, wenn ein Strom darin fließt, wobei der Öffnungszustand des ersten und zweiten Kontakts mechanisch aufrechterhalten wird, dadurch gekennzeichnet, daß
- die Schaltung ein zweites Relais (5) zum Feststellen des in dem Leiter des Wassersensors (S) fließenden Stroms und Ansteuern des ersten Relais (3) aufweist, so daß der erste und zweite Kontakt (P₁, P₂) geöffnet werden, wenn ein Strom in dem Leiter fließt, und
- das erste und zweite Impedanzglied (C₁, C₂) Kondensatoren sind.

2. Eine auf Wasser ansprechende Unterbrecherschaltung nach Anspruch 1, bei der das zweite Relais (5) eine Spule (5a) zum Feststellen eines Stromflusses durch den Wassersensor (S) aufweist und eine Spule des ersten Relais (3) durch einen Ausgangskontakt des zweiten Relais (5) getrennt wird.

3. Eine auf Wasser ansprechende Unterbrecherschaltung nach Anspruch 1, bei der eine Leuchtdiode (L) mit den Kondensatoren (C₁, C₂) der Impedanzgliedschaltung in Reihe geschaltet ist.

4. Eine auf Wasser ansprechende Unterbrecherschaltung nach Anspruch 1, bei der die Relais, die kraftseitigen Anschlußklemmen der Relais und der an die Stromquelle angeschlossene Teil der auf Wasser ansprechenden Unterbrecherschaltung wasserdicht ausgeführt sind.

## Revendications

1. Interrupteur de puissance du type sensible à l'eau, comprenant un premier relais (3) incluant des premier et second contacts (P₁,P₂), un côté de ses contacts étant relié à une source de puissance de courant alternatif et l'autre côté étant relié à une charge, un circuit d'éléments d'impédance incluant des premier et second éléments d'impédance (C₁,C₂) reliés en série l'un à l'autre en parallèle avec la charge, ledit premier relais (3) et lesdits éléments d'impédance (C₁,C₂) étant agencés pour être alimentés à partir du côté de charge desdits premier et second contacts, un élément sensible à l'eau (S) constitué d'un conducteur électrique relié à un point intermédiaire entre lesdits éléments d'impédance (C₁,C₂), et des moyens pour détecter un courant circulant dans ledit conducteur de l'élément sensible à l'eau pour ouvrir lesdits premier et second contacts (P₁,P₂) quand un courant y circule, l'état d'ouverture desdits premier et second contacts étant maintenu mécaniquement,
caractérisé en ce que le circuit comprend un second relais (5) pour détecter le courant circulant dans le conducteur de l'élément sensible à l'eau (S) et commandant le premier relais (3) pour ouvrir lesdits premier et second contacts (P₁,P₂) quand un courant circule dans ledit conducteur, et lesdits premier et second éléments d'impédance (C₁,C₂) sont des condensateurs.

2. Interrupteur de puissance du type sensible à l'eau selon la revendication 1, dans lequel ledit second relais (5) inclut une bobine (5a) pour détecter qu'un courant circule à travers ledit élément sensible à l'eau (S) et une bobine dudit premier relais (3) est coupée par un contact de sortie dudit second relais (5).

3. Interrupteur de puissance du type sensible l'eau selon la revendication 1, dans lequel une diode (L) émettant de la lumière est reliée en série avec lesdits condensateurs (C₁,C₂) du circuit d'éléments d'impédance.

4. Interrupteur de puissance du type sensible à l'eau selon la revendication 1, dans lequel lesdits relais, les bornes du côté de puissance desdits relais et la partie de l'interrupteur de puissance du type sensible à l'eau reliée à l'alimentation en puissance sont réalisés de façon étanche à l'eau.
